# EUROPEAN PATENT APPLICATION

(11) **EP 4 648 121 A1**
(43) Date of publication of application: **12.11.2025**
(21) Application number: 25172876.2
(22) Date of filing: 28.04.2025
(51) Int. Cl.: H01M 4/131, H01M 4/36, H01M 4/525, H01M 4/62, H01M 10/0525, H01M 4/02

(54) **POSITIVE ELECTRODE ACTIVE MATERIAL FOR RECHARGEABLE LITHIUM BATTERY AND METHOD OF PREPARING THE POSITIVE ELECTRODE ACTIVE MATERIAL**

(30) Priority: 07.05.2024 KR 20240059719
(71) Applicant: SAMSUNG SDI CO., LTD., Yongin-si, Gyeonggi-do 17084 (KR)
(72) Inventor: KANG, Minkyeong, 17084 Yongin-si (KR); KWON, Seonyoung, 17084 Yongin-si (KR)
(74) Representative: Marks & Clerk LLP

(57) **Abstract**

Disclosed are positive electrode active materials and rechargeable lithium batteries. The positive electrode active material comprises a first particle that includes a first lithium composite oxide and has a first average particle diameter, and a second particle that includes a second lithium composite oxide and has a second average particle diameter less than the first average particle diameter. The first particle further includes a first coating layer on a surface of the first lithium composite oxide. The second particle further includes a second coating layer on a surface of the second lithium composite oxide. Each of the first and second lithium composite oxides is lithium composite oxide that includes nickel (Ni) and excludes cobalt (Co). The first coating layer includes aluminium (Al). The second coating layer includes cobalt (Co).

## Description

### BACKGROUND

The present disclosure relates to a positive electrode active material for a rechargeable lithium battery, a method of preparing the positive electrode active material, and a rechargeable lithium battery including the positive electrode active material.

With the rapid spread of devices using batteries, such as mobile phones, laptop computers, and electric vehicles, there has been a rapidly increasing demand for rechargeable batteries with high energy density and high capacity. Accordingly, intensive research has been conducted to improve performance of rechargeable lithium batteries.

A rechargeable lithium battery includes a positive electrode, a negative electrode, and an electrolyte, wherein the positive and negative electrodes include an active material in which intercalation and deintercalation of lithium ions are possible, and generates electrical energy caused by oxidation and reduction reactions.

### SUMMARY

An embodiment of the present disclosure provides a positive electrode active material for a rechargeable lithium battery with improved efficiency and lifetime characteristics.

An embodiment of the present disclosure provides a rechargeable lithium battery including the positive electrode active material.

According to an embodiment of the present disclosure, a positive electrode active material may comprise: first particles that include a first lithium composite oxide and have a first average diameter; and second particles that include a second lithium composite oxide and have a second average diameter that is less than the first average particle diameter. Each of the first particles may further include a first coating layer on a surface of the first lithium composite oxide. Each of the second particles may further include a second coating layer on a surface of the second lithium composite oxide. Each of the first and second lithium composite oxides may be a lithium composite oxide that includes nickel and excludes cobalt. The first coating layer may include aluminium. The second coating layer may include cobalt.

According to an embodiment of the present disclosure, a positive electrode active material may comprise: first particles that include a first lithium composite oxide; and second particles that include a second lithium composite oxide. Each of the first particles may further include a first coating layer on a surface of the first lithium composite oxide. Each of the second particles may further include a second coating layer on a surface of the second lithium composite oxide. Each of the first and second lithium composite oxides may include nickel and exclude cobalt. The first coating layers may include aluminium. The second coating layers may include cobalt. The first particles and the second particles may have a weight ratio of about 25:75 to about 5:95.

According to an embodiment of the present disclosure, a method of preparing a positive electrode active material may comprise: synthesizing first particles that include a first lithium composite oxide and have a first average diameter; synthesizing second particles that includes second lithium composite oxide and have a second average particle diameter that is less than the first average diameter; coating the first particles with aluminium; coating the second particles with cobalt; and mixing the first particles and the second particles. Each of the first and second lithium composite oxides may be lithium composite oxide that includes nickel and excludes cobalt.

At least some of the above and other features of the invention are set out in the claims.

### BRIEF DESCRIPTION OF DRAWINGS

FIG. 1 is a simplified conceptual diagram showing a rechargeable lithium battery according to an embodiment of the present disclosure.
FIGS. 2 to 5 are simplified diagrams showing a rechargeable lithium battery according to an embodiment of the present disclosure.
FIG. 6 is a diagram showing a positive electrode active material according to an embodiment of the present disclosure.
FIG. 7 is a graph showing a change in cobalt concentration of a second particle according to an embodiment of the present disclosure.
FIG. 8 is a graph showing lifetime characteristics of rechargeable lithium batteries according to Embodiment 1 and Comparative Examples 1 to 3.
FIG. 9 is a graph showing lifetime characteristics of rechargeable lithium batteries according to Embodiment 1 and Comparative Examples 4 to 7.
FIG. 10 is a graph showing charge-discharge characteristics of rechargeable lithium batteries according to Embodiment 1 and Comparative Example 1.
FIG. 11 is a graph showing charge-discharge characteristics of rechargeable lithium batteries according to Embodiment 1 and Comparative Examples 4 to 7.
FIG. 12 is an enlarged view showing a portion of FIG. 11.
FIG. 13 is a graph showing dQ/dV charge-discharge differential curves of rechargeable lithium batteries according to Embodiment 1 and Comparative Example 1.
FIG. 14 is a graph showing dQ/dV charge-discharge differential curves of rechargeable lithium batteries according to Embodiment 1 and Comparative Examples 4 to 7.
FIG. 15 is a graph showing X-ray diffraction of composite positive electrode active materials according to Embodiment 1 and Comparative Examples 4 to 7.

### DETAILED DESCRIPTION OF EMBODIMENTS

In order to sufficiently understand the configuration and effect of the present disclosure, some embodiments of the present disclosure will be described with reference to the accompanying drawings. It should be noted, however, that the present disclosure is not limited to the following embodiments and may be implemented in various forms. Rather, the embodiments are provided only to disclose the present disclosure and let those skilled in the art fully understand the scope of the present disclosure.

In this description, it will be understood that, when an element is referred to as being on another element, the element can be directly on the other element or intervening elements may be present between therebetween. In the drawings, thicknesses of some components are exaggerated for effectively explaining the technical contents. Like reference numerals refer to like elements throughout the specification.

Unless otherwise specially noted in this description, the expression of singular form may include the expression of plural form. In addition, unless otherwise specially noted, the phrase "A or B" may indicate "A but not B", "B but not A", and "A and B". The terms "comprises/includes" and/or "comprising/including" used in this description do not exclude the presence or addition of one or more other components.

As used herein, the term "combination thereof" may refer to a mixture, a stack, a composite, a copolymer, an alloy, a blend, or a reaction product.

Unless otherwise especially defined in this description, a particle diameter may be an average particle diameter. The average diameter (D₅₀) may be measured by a method widely known to those skilled in the art, for example, by a particle size analyzer, a transmission electron microscope (TEM) image, or a scanning electron microscope (SEM) image. Alternatively, an average diameter value may be obtained by using a dynamic light scattering method to measure, performing data analysis to count the number of particles for each particle size range, and calculating the average diameter from the result. Unless otherwise defined, the average diameter may refer to a diameter (D₅₀) of particles having a cumulative volume of 50 vol% in particle size distribution. Alternatively, a particle diameter distribution may be obtained by measuring sizes (diameters or major axis lengths) of about twelve particles randomly selected from a transmission electron microscopic image, and then a diameter (D₅₀) of particles whose cumulative volume is 50 vol% in the particle diameter distribution may be referred to as the average diameter unless otherwise specified.

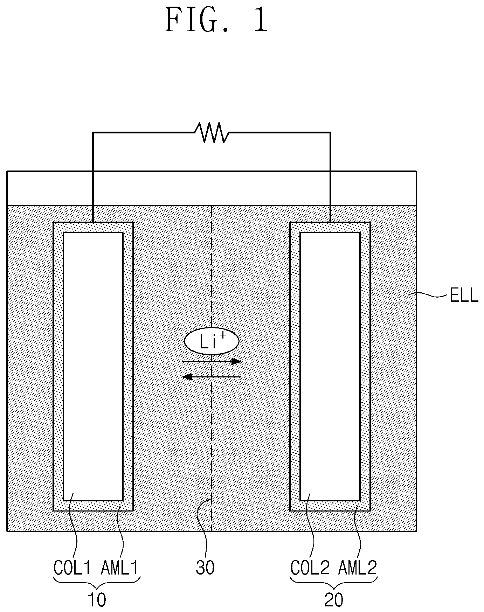

FIG. 1 is a simplified conceptual diagram showing a rechargeable lithium battery according to an embodiment of the present disclosure. Referring to FIG. 1, a rechargeable lithium battery may include a positive electrode 10, a negative electrode 20, a separator 30, and an electrolyte ELL.

The positive electrode 10 and the negative electrode 20 may be spaced apart from each other across the separator 30. The separator 30 may be disposed between the positive electrode 10 and the negative electrode 20. The positive electrode 10, the negative electrode 20, and the separator 30 may be in contact with the electrolyte ELL. The positive electrode 10, the negative electrode 20, and the separator 30 may be impregnated in the electrolyte ELL.

The electrolyte ELL may be a medium by which lithium ions are transferred between the positive electrode 10 and the negative electrode 20. In the electrolyte ELL, the lithium ions may move through the separator 30 toward one of the positive electrode 10 and the negative electrode 20.

### Positive Electrode

The positive electrode 10 for a rechargeable lithium battery may include a current collector COL1 and a positive electrode active material layer AML1 formed on the current collector COL1. The positive electrode active material layer AML1 may include a positive electrode active material and further include a binder and/or a conductive material.

The positive electrode 10 may further include an additive that can serve as a sacrificial positive electrode.

An amount of the positive electrode active material may be about 90 wt% to about 99.5 wt% relative to 100 wt% of the positive electrode active material layer AML1. An amount of each of the binder and the conductive material may be about 0.5 wt% to about 5 wt% relative to 100 wt% of the positive electrode active material layer AML1.

The binder may serve to improve attachment of positive electrode active material particles to each other and also to improve attachment of the positive electrode active material to the current collector COL1. The binder may include, for example, polyvinyl alcohol, carboxymethyl cellulose, hydroxypropyl cellulose, diacetyl cellulose, polyvinylchloride, carboxylated polyvinylchloride, polyvinylfluoride, ethylene oxide-containing polymer, polyvinylpyrrolidone, polyurethane, polytetrafluoroethylene, polyvinylidene fluoride, polyethylene, polypropylene, styrene-butadiene rubber, (meth)acrylated styrene-butadiene rubber, epoxy resin, (meth)acrylic resin, polyester resin, or nylon, but the present disclosure is not limited to these examples.

The conductive material may be used to provide an electrode with conductivity, and any suitable conductive material that does not cause a chemical change in a battery may be used as the conductive material to constitute the battery. The conductive material may include, for example, a carbon-based material such as natural graphite, artificial graphite, carbon black, acetylene black, Ketjen black, carbon fiber, carbon nano-fiber, and carbon nano-tube; a metal powder or metal fiber containing one or more of copper, nickel, aluminium, and silver; a conductive polymer such as a polyphenylene derivative; or a mixture thereof.

Aluminium (Al) may be used as the current collector COL1, but the present disclosure is not limited thereto.

### Positive Electrode Active Material

The positive electrode active material in the positive electrode active material layer AML1 may include a compound (e.g., lithiated intercalation compound) that can reversibly intercalate and deintercalate lithium. For example, the positive electrode active material may include at least one kind of composite oxide including lithium and metal that is selected from cobalt, manganese, nickel, and a combination thereof.

The composite oxide may include lithium transition metal composite oxide, for example, lithium-nickel-based oxide, lithium-cobalt-based oxide, lithium-manganese-based oxide, lithium-iron-phosphate-based compounds, cobalt-free nickel-manganese-based oxide, or a combination thereof.

The positive electrode active material may include a compound expressed by one of chemical formulae below. LiₐA_{1-b}X_{b}O_{2-c}D_{c}, where 0.90≤a≤1.8, 0≤b≤0.5, and 0≤c≤0.05; LiₐMn_{2-b}X_{b}O_{4-c}D_{c}, where 0.90≤a≤1.8, 0≤b≤0.5, and 0≤c≤0.05; LiₐNi_{1-b-c}Co_{b}X_{c}O_{2-α}D_{α}, where 0.90≤a≤1.8, 0≤b≤0.5, 0≤c≤0.5, and 0<α<2; LiₐNi_{1-b-c}Mn_{b}X_{c}O_{2-α}D_{α}, where 0.90≤a≤1.8, 0≤b≤0.5, 0≤c≤0.5, and 0<α<2; LiₐNi_{b}Co_{c}L¹_{d}GₑO₂, where 0.90≤a≤1.8, 0≤b≤0.9, 0≤c≤0.5, 0≤d≤0.5, and 0≤e≤0.1; LiₐNiG_{b}O₂, where 0.90≤a≤1.8 and 0.001≤b≤0.1; LiₐCoG_{b}O₂, where 0.90≤a≤1.8 and 0.001≤b≤0.1; LiₐMn_{1-b}G_{b}O₂, where 0.90≤a≤1.8 and 0.001≤b≤0.1; LiₐMn₂G_{b}O₄, where 0.90≤a≤1.8 and 0.001≤b≤0.1; LiₐMn_{1-g}G_{g}PO₄, where 0.90≤a≤1.8 and 0≤g≤0.5; Li(_{3-f})Fe₂(PO₄)₃, where 0≤f≤2; LiₐFePO₄, where 0.90≤a≤1.8.

In the chemical formulas above, A is Ni, Co, Mn, or a combination thereof, X is Al, Ni, Co, Mn, Cr, Fe, Mg, Sr, V, a rare-earth element, or a combination thereof, D is O, F, S, P, or a combination thereof, G is Al, Cr, Mn, Fe, Mg, La, Ce, Sr, V, or a combination thereof, and L¹ is Mn, Al, or a combination thereof.

The positive electrode active material may be a high-nickel-based positive electrode active material having a nickel amount of equal to or greater than about 80 mol%, equal to or greater than about 85 mol%, equal to or greater than about 90 mol%, equal to or greater than about 91 mol%, or equal to or greater than about 94 mol% and equal to or less than about 99 mol% relative to 100 mol% of the metal in the lithium transition metal composite oxide excluding lithium. The high-nickel-based positive electrode active material may provide high capacity and thus may be used to provide to a high-capacity and high-density rechargeable lithium battery.

### Negative Electrode 20

The negative electrode 20 for a rechargeable lithium battery may include a current collector COL2 and a negative electrode active material layer AML2 positioned on the current collector COL2. The negative electrode active material layer AML2 may include a negative electrode active material and may further include a binder and/or a conductive material.

The negative electrode active material layer AML2 may include a negative electrode active material of about 90 wt% to about 99 wt%, a binder of about 0.5 wt% to about 5 wt%, and a conductive material of about 0 wt% to about 5 wt%.

The binder may serve to improve attachment of negative electrode active material particles to each other and also to improve attachment of the negative electrode active material to the current collector COL2. The binder may include a non-aqueous binder, an aqueous binder, a dry binder, or a combination thereof.

The non-aqueous binder may include polyvinyl chloride, carboxylated polyvinyl chloride, polyvinyl fluoride, ethylene propylene copolymer, polystyrene, polyurethane, polytetrafluoroethylene, polyvinylidene fluoride, polyethylene, polypropylene, polyamide imide, polyimide, or a combination thereof.

The aqueous binder may include styrene-butadiene rubber, (meth)acrylated styrene-butadiene rubber, (meth)acrylonitrile-butadiene rubber, (meth)acrylic rubber, butyl rubber, fluoro elastomer, polyethylene oxide, polyvinyl pyrrolidone, polyepichlorohydrin, polyphosphazene, poly(meth)acrylonitrile, ethylene propylene diene copolymer, polyvinyl pyridine, chlorosulfonated polyethylene, latex, polyester resin, (meth)acrylic resin, phenolic resin, epoxy resin, polyvinyl alcohol, or a combination thereof.

When an aqueous binder is used as the negative electrode binder, a cellulose-based compound capable of providing viscosity may further be included. The cellulose-based compound may include one or more of carboxymethyl cellulose, hydroxypropylmethyl cellulose, methyl cellulose, and alkali metal salts thereof. The alkali metal may include Na, K, or Li.

The dry binder may include a fibrillizable polymer material, for example, polytetrafluoroethylene, polyvinylidene fluoride, polyvinylidene fluoride-hexafluoropropylene copolymer, polyethylene oxide, or a combination thereof.

The conductive material may be used to provide an electrode with conductivity, and any suitable conductive material that does not cause a chemical change in a battery may be used as the conductive material. For example, the conductive material may include a carbon-based material such as natural graphite, artificial graphite, carbon black, acetylene black, Ketjen black, carbon fiber, carbon nano-fiber, and carbon nano-tube; a metal powder or metal fiber including one or more of copper, nickel, aluminium, and silver; a conductive polymer such as a polyphenylene derivative; or a mixture thereof.

The current collector COL2 may include a copper foil, a nickel foil, a stainless-steel foil, a titanium foil, a nickel foam, a copper foam, a polymer substrate coated with a conductive metal, or a combination thereof.

### Negative Electrode Active Material

The negative electrode active material in the negative electrode active material layer AML2 may include a material that can reversibly intercalate and deintercalate lithium ions, lithium metal, a lithium metal alloy, a material that can dope and de-dope lithium, or transition metal oxide.

The material that can reversibly intercalate and deintercalate lithium ions may include a carbon-based negative electrode active material, for example, crystalline carbon, amorphous carbon, or a combination thereof. For example, the crystalline carbon may include graphite such as non-shaped, sheet-shaped, flake-shaped, sphere-shaped, or fiber-shaped natural or artificial graphite, and the amorphous carbon may include soft carbon, hard carbon, mesophase pitch carbon, or calcined coke.

The lithium metal alloy may include an alloy of lithium and metal that is selected from Na, K, Rb, Cs, Fr, Be, Mg, Ca, Sr, Si, Sb, Pb, In, Zn, Ba, Ra, Ge, Al, and Sn.

The material that can dope and de-dope lithium may include a Si-based negative electrode active material or a Sn-based negative electrode active material. The Si-based negative electrode active material may include silicon, silicon-carbon composite, SiOx (where 0<x<2), Si-Q alloy, or a combination thereof. In the formula Si-Q, Q may be alkali metal, alkaline earth metal, Group 13 element, Group 14 element (except for Si), Group 15 element, Group 16 element, transition metal, a rare-earth element, or a combination thereof. The Sn-based negative electrode active material may include Sn, SnO₂, a Sn-based alloy, a combination thereof.

The silicon-carbon composite may be a composite of silicon and amorphous carbon. According to an embodiment, the silicon-carbon composite may have a structure in which the amorphous carbon is coated on surfaces of the silicon particles. For example, the silicon-carbon composite may include secondary particles (core) in which primary silicon particles are assembled, and an amorphous carbon coating layer (shell) positioned on surfaces of the secondary particles. The amorphous carbon may also be positioned between the primary silicon particles. For example, the primary silicon particles may be coated with the amorphous carbon. The secondary particles may be present dispersed in an amorphous carbon matrix.

The silicon-carbon composite may further include crystalline carbon. For example, the silicon-carbon composite may include a core including crystalline carbon and silicon particles. An amorphous carbon coating layer may be provided on a surface of the core.

The Si-based negative electrode active material or the Sn-based negative electrode active material may be used in combination with a carbon-based negative electrode active material.

### Separator

Based on type of the rechargeable lithium battery, the separator 30 may be present between positive electrode 10 and the negative electrode 20. The separator 30 may include one or more of polyethylene, polypropylene, and polyvinylidene fluoride. The separator 30 may have a multi-layered separator thereof such as a polyethylene/polypropylene bi-layered separator, a polyethylene/polypropylene/polyethylene tri-layered separator, and a polypropylene/polyethylene/polypropylene tri-layered separator.

The separator 30 may include a porous substrate and a coating layer positioned on one or opposite surfaces of the porous substrate. The coating layer may include an organic material, an inorganic material, or a combination thereof.

The porous substrate may be a polymer layer including a polymer selected from polyolefin such as polyethylene and polypropylene, polyester such as polyethylene terephthalate and polybutylene terephthalate, polyacetal, polyamide, polyimide, polycarbonate, polyetherketone, polyaryletherketone, polyetherimide, polyamideimide, polybenzimidazole, polyethersulfone, polyphenyleneoxide, cyclic olefin copolymer, polyphenylenesulphide, polyethylene naphthalate, glass fiber, TEFLON^{®}, and polytetrafluoroethylene, or may be a copolymer or mixture including two or more of the materials mentioned above.

The organic material may include a polyvinylidenefluoride-based copolymer or a (meth)acrylic copolymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, Boehmite, or a combination thereof, but the present disclosure is not limited to these examples.

The organic material and the inorganic material may be mixed in one coating layer or may be present as a stack of coating layers including the organic material and a coating layer including an inorganic material.

### Electrolyte

The electrolyte ELL for the rechargeable lithium battery may include a non-aqueous organic solvent and a lithium salt.

The non-aqueous organic solvent may serve as a medium for transmitting ions that participate in an electrochemical reaction of the battery. The non-aqueous organic solvent may include a carbonate-based solvent, an ester-based solvent, an ether-based solvent, a ketone-based solvent, an alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), or butylene carbonate (BC).

The ester-based solvent may include methyl acetate, ethyl acetate, n-propyl acetate, dimethyl acetate, methyl propionate, ethyl propionate, decanolide, mevalonolactone, valerolactone, or caprolactone.

The ether-based solvent may include dibutyl ether, tetraglyme, diglyme, dimethoxyethane, 2-methyltetrahydrofuran, 2,5-dimethyltetrahydrofuran, or tetrahydrofuran. The ketone-based solvent may include cyclohexanone. The alcohol-based solvent may include ethyl alcohol or isopropyl alcohol. The aprotic solvent may include nitriles such as R-CN (where R is a hydrocarbon group having a C2 to C20 linear, branched, or cyclic structure and may include a double bond, an aromatic ring, or an ether group); amides such as dimethylformamide; dioxolanes such as 1,3-dioxolane or 1,4-dioxolane; or sulfolanes.

The non-aqueous organic solvent may be used alone or in a mixture of two or more substances.

In addition, when a carbonate-based solvent is used, a cyclic carbonate and a chain carbonate may be mixed and used, and the cyclic carbonate and the chain carbonate may be mixed in a volume ratio of about 1:1 to about 1:9.

The lithium salt may be a material that is dissolved in the non-aqueous organic solvent to serve as a supply source of lithium ions in a battery. The lithium salt also plays a role in enabling a basic operation of a rechargeable lithium battery and in promoting the movement of lithium ions between positive and negative electrodes. The lithium salt may include, for example, at least one of LiPF₆, LiBF₄, LiSbF₆, LiAsF₆, LiClO₄, LiAlO₂, LiAlCl₄, LiPO₂F₂, LiCl, LiI, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂) (where x and y are integers of 1 to 20), lithium trifluoromethane sulfonate, lithium tetrafluoroethanesulfonate, lithium difluorobis(oxalato)phosphate (LiDFBOP), and lithium bis(oxalato)borate (LiBOB)

### Rechargeable Lithium Battery

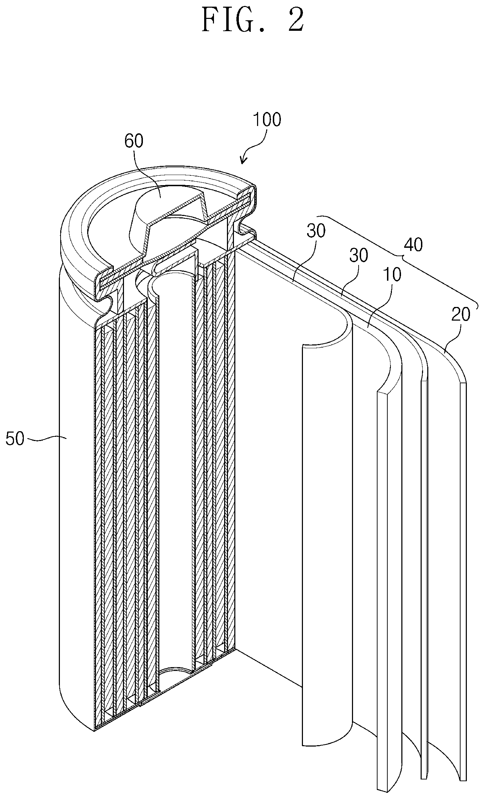

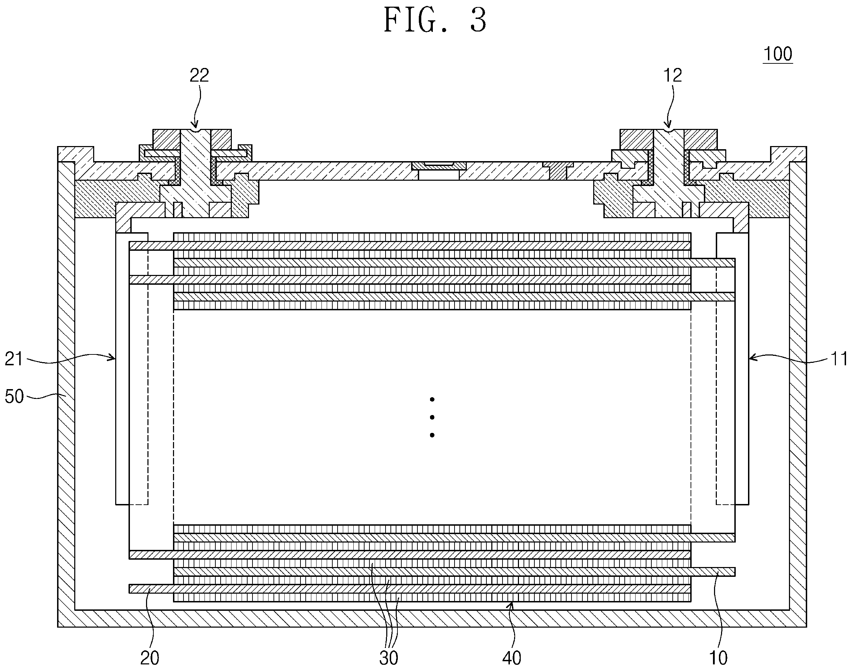

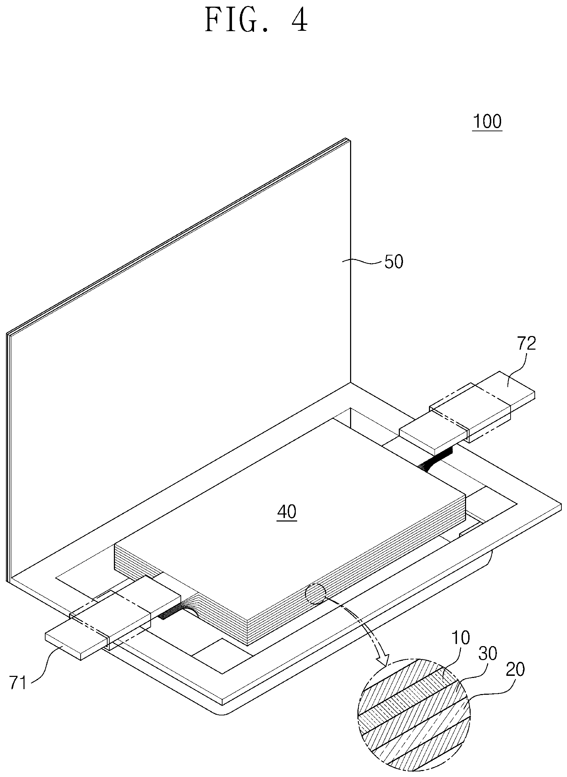

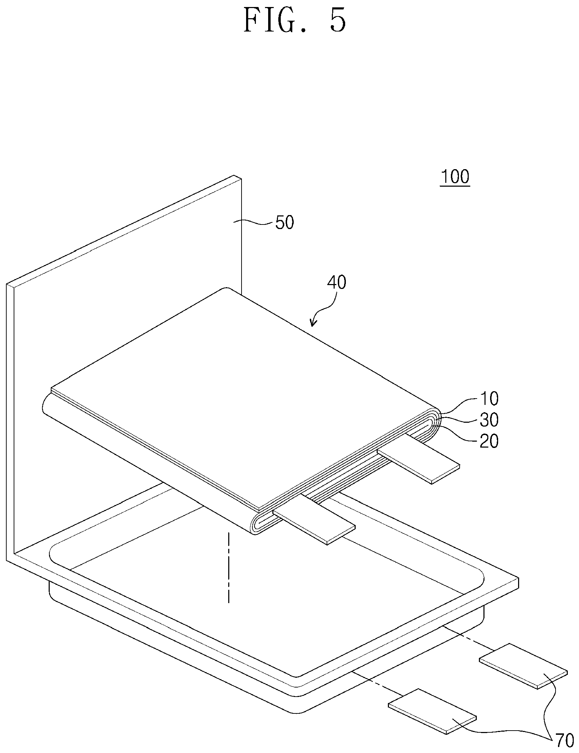

Based on shape of a rechargeable lithium battery, the rechargeable lithium battery may be classified as a cylindrical, prismatic, pouch, or coin type. FIGS. 2 to 5 illustrate simplified diagrams showing a rechargeable lithium battery according to embodiments. FIG. 2 shows a cylindrical battery, FIG. 3 shows a prismatic battery, and FIGS. 4 and 5 show pouch-type batteries. Referring to FIGS. 2 to 5, a rechargeable lithium battery 100 may include an electrode assembly 40 in which a separator 30 is interposed between a positive electrode 10 and a negative electrode 20. The rechargeable lithium battery 100 may also include a casing 50 in which the electrode assembly 40 is accommodated. The positive electrode 10, the negative electrode 20, and the separator 30 may be impregnated in an electrolyte (not shown). The rechargeable lithium battery 100 may include a sealing member 60 that seals the casing 50 as illustrated in FIG. 2. In addition, as illustrated in FIG. 3, the rechargeable lithium battery 100 may include a positive electrode lead tab 11, a positive electrode terminal 12, a negative electrode lead tab 21, and a negative electrode terminal 22. As shown in FIGS. 4 and 5, the rechargeable lithium battery 100 may include an electrode tab 70, which may include a positive electrode tab 71 and a negative electrode tab 72. The electrode tab 70 serves as an electrical path for a current generated in the electrode assembly 40.

The following description will focus on a positive electrode active material for a rechargeable lithium battery according to some embodiments of the present disclosure.

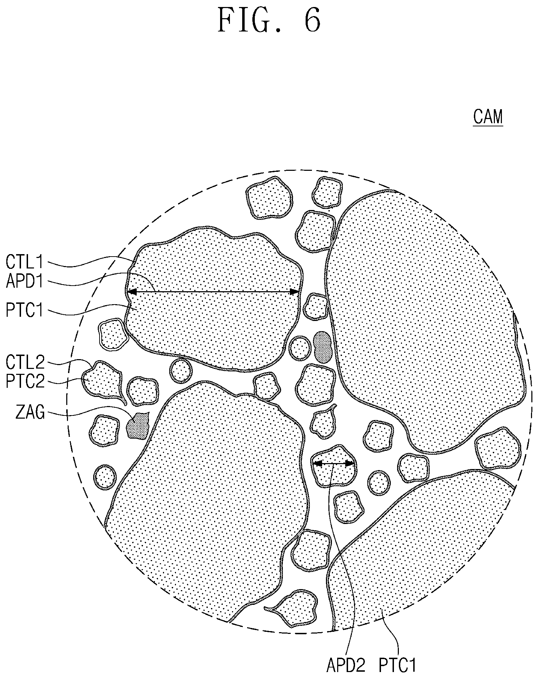

FIG. 6 is a diagram showing a positive electrode active material according to an embodiment of the present disclosure. Referring to FIG. 6, a positive electrode active material CAM may be a powder before being used in the positive electrode active material layer AML1 discussed above with reference to FIG. 1. The positive electrode active material CAM may include a plurality of first particles PTC1, a plurality of second particles PTC2, and a plurality of agglomerates ZAG.

The first particles PTC1 may have a first average diameter APD1, and the second particles PTC2 may have a second average diameter APD2. The second particle diameter APD2 may be less than the first particle diameter APD1. In the present disclosure, the first particles PTC1 may be called large particles, and the second particles PTC2 may be called small particles.

The first particles PTC1 include a first lithium composite oxide, and the second particles PTC2 include a second lithium composite oxide. Each of first and second lithium composite oxides include nickel (Ni). Cobalt (Co) is omitted from the first and second lithium composite oxides.

In the present disclosure, an indication that cobalt is omitted from a lithium composite oxide indicates that no cobalt precursor is used in preparing lithium composite oxide. Lithium composite oxide in which cobalt is omitted may refer to lithium composite oxide represented by a composition formula in which a cobalt element is excluded. The phrase "cobalt is omitted in lithium composite oxide" and similar phrasing may also mean that a concentration of cobalt in lithium composite oxide is in a range of, for example, equal to or less than about 0.5 at%, equal to or less than about 0.1 at%, equal to or less than about 0.01 at%, equal to or less than about 0.005 at%, or equal to or less than about 0.001 at%. When cobalt is included in a coating layer, such as the coating layers of the second particle PTC2 (discussed below), a lithium composite oxide particle with the coating layer includes cobalt as an impurity. This may be caused by the diffusion of cobalt from the coating layer into the lithium composite oxide particle.

The agglomerate ZAG may be provided in a space between the first and second particles PTC1 and PTC2. The agglomerate ZAG may originate from a coating agent, as will be discussed below. The agglomerate ZAG may include at least one of cobalt (Co) and aluminium (Al). For example, the agglomerate ZAG may be a cluster formed by agglomeration of a portion of a coating agent that is not coated on surfaces of the first and second particles PTC1 and PTC2.

### First Particles

In an embodiment of the present disclosure, the first particles PTC1 may be provided in the form of secondary particles in which a plurality of primary particles are aggregated.

The first particles PTC1 according to embodiments may include a first coating layer CTL1 positioned on surfaces of the secondary particles. The first coating layers CTL1 including aluminium (Al) may be positioned on an entirety or at least a portion of the surfaces of the secondary particles. As the first particles PTC1 are coated with the first coating layers CTL1, structural collapse due to repeated charge and discharge may be effectively suppressed to thereby improve lifetime properties at room and high temperatures of positive electrode active materials that are formed with the first particles. In addition, the coating layers may suppress side reactions with an electrolyte to thereby improve long-term lifetime characteristics of the positive electrode active materials.

The first coating layers CTL1 may include an aluminium-containing compound. The aluminium-containing compound may be, for example, aluminium hydroxide, aluminium chloride, aluminium oxide, or a combination thereof. In addition, the aluminium-containing compound may further include one or more of lithium, manganese, and nickel. For example, the aluminium-containing compound may be aluminium oxide.

The first coating layer CTL1 of the first particle PTC1 may have an aluminium amount of about 5 at% to about 15 at%. The aluminium amount may be a ratio of the aluminium amount to the total amount of nickel, manganese, and aluminium present in a coating layer. The aluminium amount may be measured by EP-EDS (energy profiling-energy dispersive X-ray spectroscopy). A surface weight of aluminium of the first coating layer CTL1 may range from about 2 to about 4.6, for example, about 2 to about 4, about 2.5 to about 4, or about 3 to about 4. In the present disclosure, the surface weight of aluminium may refer to a ratio of an aluminium amount in a coating layer to an aluminium amount in a final product. For example, the surface weight of aluminium may be defined as a value obtained by dividing an aluminium amount in a coating layer measured by EP-EDS by an aluminium amount in a final product composition.

The aluminium amount in the final product composition may be a ratio of the aluminium amount to the total amount of nickel, manganese, and aluminium present in an entirety of the first particles PTC1. The amount may be measured using inductively coupled mass spectroscopy (ICP-MS) or inductively coupled plasma optical emission spectroscopy (ICP-OES).

When the aluminium amount of the first coating layer CTL1 is less than about 5 at%, there may be an increase in gas generation at high temperatures and decrease in high-temperature lifetime characteristics of the positive electrode active material CAM. When the aluminium amount of the first coating layer CTL1 is greater than about 15 at%, a surface resistance of the positive electrode active material CAM may increase to cause a reduction in initial capacity characteristics and high-temperature lifetime characteristics.

The first particles PTC1 according to embodiments may further include a grain boundary aluminium coating part positioned on surfaces of primary particles within the secondary particles. The grain boundary aluminium coating part may be present not on the surfaces of the secondary particles but rather in an interior of the secondary particles and may be regarded as being coated along an interface of the primary particles within the secondary particles. Therefore, it may be described that the grain boundary aluminium coating part is coated on the interfaces. In this description, the interior of the secondary particle may indicate an entire inner portion except for a surface of the secondary particle. For example, an entire inside may be from an outer surface of the secondary particle to a depth of about 10 nm, or a portion from a depth of about 10 nm to a depth of about 2 µm. As the first particles PTC1 according to embodiments may include the grain boundary aluminium coating part, structural stability may be reinforced, a uniform coating layer may be formed on the surface of the first particles PTC1, and a coating amount on the surfaces may be properly adjusted to improve initial charge-discharge efficiency and lifetime characteristics without causing an increase in resistance.

The first average diameter APD1 of the first particles PTC1, or an average diameter of the secondary particles, may range from about 5 µm to about 25 µm. For example, the first average diameter APD1 may range from about 7 µm to about 25 µm, from about 10 µm to about 25 µm, from about 15 µm to about 25 µm, or from about 10 µm to about 20 µm. The first average diameter APD 1 of the secondary particles of the first particles PTC1 may be greater than the second average diameter APD2 of the second particles PTC2 (discussed below). In this disclosure, the first average diameter APD1 of the first particles PTC1 may be determined by randomly selecting approximately 30 secondary particle-shaped active materials from an electron microscope image of the positive electrode active material CAM, measuring particle diameters, and taking a diameter (D₅₀) of particles having a cumulative volume of 50 vol% in particle size distribution as an average diameter.

The positive electrode active material CAM according to embodiments may be a mixture of the first particles PTC1 as large polycrystalline particles and the second particles PTC2 as single particles and small particles. Therefore, it is possible to improve a mixture density and to achieve high capacity and high energy density.

The first particles PTC1 include a first lithium composite oxide inside the first coating layers CTL1. The first lithium composite oxide may be a high-nickel-based positive electrode active material containing high amount of nickel. In such a case, an amount of nickel in the first lithium composite oxide may be equal to or greater than about 70 mol%, for example, equal to or greater than about 85 mol%, equal to or greater than about 90 mol%, equal to or greater than about 91 mol%, equal to or less than about 99.9 mol%, or equal to or less than about 99.0 mol% relative to the total amount of elements excluding lithium and oxygen. The high-nickel-based first lithium composite oxide may provide for high capacity and high performance. The first lithium composite oxide is cobalt-free lithium composite oxide.

### Second Particles

In an embodiment of the present disclosure, the second particles PTC2 may be provided in the form of single particles. In this description, the term "single particle" may mean that one single particle is present alone without a grain boundary inside of the particle and is a monolithic structure in which particles are not aggregated together with one another but present as an independent phase in terms of morphology. For example, the single particle may be a single crystal. Alternatively, the single particle may be a particle containing several crystals. The single particle may be provided as a single isolated form or may be present in which less than 10 single particles are adhered to each other.

The second particles PTC2 according to embodiments may include second coating layers CTL2 positioned on surfaces of the single particles. The second particles PTC2 are coated with the second coating layers CTL2 containing cobalt, and, thus, there may be a reduction in charge capacity imbalance with the first particles PTC1 having a large grain size. Accordingly, it may be possible to suppress a phenomenon where a load is applied to only one of large and small particles during charge and discharge.

The second coating layers CTL2 may include a cobalt-containing compound. The cobalt-containing compound may be, for example, cobalt oxide, cobalt hydroxide, cobalt carbonate, or a composite or mixture thereof. The cobalt-containing compound may further include other metal or non-metal elements in addition to cobalt. For example, the cobalt-containing compound may further include one or more of lithium, manganese, and nickel. As a specific example, the cobalt-containing compound may be lithium cobalt oxide.

The second coating layers CTL2 of the second particles PTC2 may have a cobalt amount of about 5 at% to about 15 at%. The cobalt amount may be a ratio of the cobalt amount to the total amount of nickel, manganese, and cobalt present in a coating layer, and may be measured by EP-EDS (energy profiling-energy dispersive X-ray spectroscopy). A surface weight of cobalt of the second coating layer CTL2 may range from about 3 to about 5.8, for example, about 3 to about 5.5, about 3.5 to about 5, or about 3.5 to about 4. In the present disclosure, the surface weight of cobalt may refer to a ratio of a cobalt amount of a coating layer to a cobalt amount of a final product. For example, the surface weight of cobalt may be defined as a value obtained by dividing a cobalt amount in a coating layer measured by EP-EDS by a cobalt amount in a final product composition.

The cobalt amount in the final product composition may be a ratio of the cobalt amount to the total amount of nickel, manganese, and cobalt present in an entirety of the second particles PTC2. Such a cobalt amount may be measured using inductively coupled mass spectroscopy (ICP-MS) or inductively coupled plasma optical emission spectroscopy (ICP-OES).

When the cobalt amount of the second coating layer CTL2 is less than about 5 at%, a cation mixing amount of the positive electrode active material CAM may increase to thereby cause a reduction in ordering of crystal arrangement, and therefore a positive electrode may have an unstable structure. When the cobalt amount of the second coating layer CTL2 is greater than about 15 at%, a surface resistance of the positive electrode active material CAM may increase to cause a reduction in initial capacity characteristics and high-temperature lifetime characteristics.

The second average diameter APD2 of the second particles PTC2 may range from about 0.1 µm to about 10 µm, for example, about 0.1 µm to about 9 µm, about 0.5 µm to about 9 µm, or about 1 µm to about 8.5 µm. The second average diameter APD2 of the second particles PTC2 may be less than the first average diameter APD1 of the first particles PTC1. Therefore, the positive electrode active material CAM may have an increased density. In this disclosure, the second average diameter APD2 of the second particles PTC2 may be determined by randomly selecting approximately 30 single particle-shaped active materials from an electron microscope image of the positive electrode active material CAM, measuring the particle diameters, and taking a diameter (D₅₀) of particles having a cumulative volume of 50 vol% in particle size distribution as an average diameter.

The second particles PTC2 includes a second lithium composite oxide inside the second coating layers CTL2. For example, the second lithium composite oxide may be a high-nickel-based positive electrode active material containing high amount of nickel. In this case, an amount of nickel in the second lithium composite oxide may be equal to or greater than about 70 mol%, for example, equal to or greater than about 85 mol%, equal to or greater than about 90 mol%, equal to or greater than about 91 mol%, equal to or less than about 99.9 mol%, or equal to or less than about 99.0 mol% relative to the total amount of elements excluding lithium and oxygen. The high-nickel-based second lithium composite oxide may provide for high capacity and high performance. The second lithium composite oxide may be a cobalt-free lithium composite oxide.

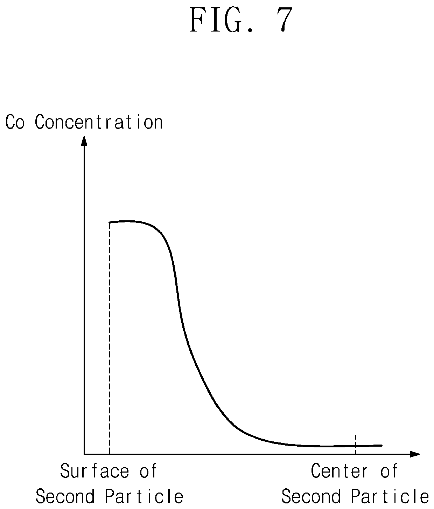

As the second particles PTC2 include a cobalt coating part, cobalt may be generally detected to the surfaces of the particles. An inside of the second particles PTC2, or the second lithium composite oxide, may be cobalt-free lithium composite oxide. In this disclosure, the interior of the second particles PTC2 may indicate an entire inner portion except for surfaces of the second particles PTC2, for example, an entire inside from an outer surface of the second particle PTC2 to a depth of about 10 nm, or a portion from a depth of about 10 nm to a depth of about 2 µm. Referring to FIG. 7, the second particles PTC2 may have a concentration gradient in which a cobalt concentration abruptly decreases at a boundary between the second coating layer CTL2 and the interior of each of the second particles PTC2.

The first lithium composite oxide and the second lithium composite oxide may each independently be lithium composite oxide represented by Chemical Formula 1:

[Chemical Formula 1] LiₐNiₓMn_{y}A_{z}O_{2-b}X_{b}

In Chemical Formula 1, a, x, y, z, and b may be 0.9≤a≤1.8, 0.7≤x<1, 0<y≤0.3, 0≤z≤0.3, 0.9≤x+y+z≤1.1, and 0≤b≤0.1, A may be at least one of B, Ba, Ca, Ce, Cr, Fe, Mg, Mo, Nb, Si, Sr, Ti, V, W, and Zr, and X may be one or more of F, P, and S.

In embodiments, the first particles PTC1 and the second particles PTC2 in the positive electrode active material CAM may have a weight ratio of about 25:75 to about 5:95, for example, about 25:75 to about 10:90, or about 25:75 to about 20:80. When the first particles PTC1 and the second particles PTC2 are provided at such ratios, there may be an improvement in charge-discharge characteristics of the positive electrode active material.

In a dQ/dV charge-discharge differential curve in a voltage range between about 4.1 V and about 4.25 V of a rechargeable lithium battery including a positive electrode active material according to embodiments of the present disclosure, a ratio (H1+M / H2+H3) of intensity of H1+M peak to intensity of H2+H3 peak may range from about 2.2 to about 2.5.

In an X-ray diffraction analysis graph of a positive electrode including a positive electrode active material according to the present disclosure, a value of I₍₀₀₃₎/I₍₁₀₄₎ may range from about 4.2 to about 6.1, about 4.3 to about 6, or about 4.5 to about 5.5. A full width at half maximum (FWHM) of a (104) peak may range from about 0.18 to about 0.19.

### Preparation of Positive Electrode Active Material

The following will describe a method of synthesizing the first particles PTC1. To start, a first precursor may be prepared. The first precursor may include Ni, Mn, and A in Chemical Formula 1 discussed above. The A may be at least one of B, Ba, Ca, Ce, Cr, Fe, Mg, Mo, Nb, Si, Sr, Ti, V, W, and Zr.

In an embodiment, the first precursor may be obtained through a coprecipitation method. The coprecipitation method may include dissolving a raw transition metal material in a solvent such as distilled water and causing precipitation by continuously providing a reactor with a transition metal salt solution including the dissolved transition metal material along with a chelating agent and an alkaline aqueous solution. A precipitate may be collected in the form of slurry, and then a slurry solution may be filtered and dried to obtain metal composite oxide as the precursor.

In the present disclosure, the raw transition metal material may include a metal salt containing at least one of Ni, Mn, B, Ba, Ca, Ce, Cr, Fe, Mg, Mo, Nb, Si, Sr, Ti, V, W, and Zr. The metal salt may include sulfate, nitrate, acetate, halide, or hydroxide, and there is no particular limitation in this regard as long as a material can be dissolved in a solvent. The raw transition metal material may be mixed by adjusting a molar ratio to allow a positive electrode active material to have high capacity characteristics. For example, the molar ratio may determine the subscript "x" of Chemical Formula 1.

The first precursor and a lithium raw material may be mixed at a certain ratio to form a mixture. For example, the first precursor and the lithium raw material may be mixed at a molar ratio of about 1:1. The lithium raw material may be used without particular limitation and may be a material that is commonly used in the fabrication of positive electrode active materials. For example, the lithium raw material may include a lithium salt, such as lithium carbonate, lithium nitrate, lithium hydroxide, or lithium sulfate.

The mixture may be added to a furnace and a first calcination process may be performed at a first temperature. The first temperature may range from about 700 °C to about 1,000 °C. For example, the first temperature may range from about 900 °C to about 1,000 °C. The first calcination process may be performed under an oxidizing atmosphere such as air or oxygen. A heat treatment time of the first calcination process may range from about 10 hours to about 30 hours. In embodiments of the present disclosure, before the first calcination process, a preliminary calcination process may be additionally performed at about 150 °C to about 800 °C.

The first calcination process may form first particles from the mixture including the first precursor and the lithium raw material. A crushing process may be performed on the synthesized first particles. The crushed first particles may have a first average diameter.

A coating process may be performed on the crushed first particles. The coating process includes coating aluminium on surfaces of the first particles. For example, the first particles and a first coating raw material may be mixed with each other. The first particles and the first coating raw material may be added to and mixed in a solvent (e.g., distilled water). The first coating raw material may be an aluminium compound. The aluminium compound may be, for example, aluminium hydroxide, but the present disclosure is not particularly limited thereto. The first particles and the first coating raw material may be evenly mixed with an agitator. The first particles may be filtered and dried, and then a surface treatment may be performed on the first particles. The surface treatment may include performing a heat treatment process under an oxidizing atmosphere such as air or oxygen. The surface treatment may be performed at a temperature of about 700 °C to about 1,000 °C.

In embodiments of the present disclosure, the coating process may include a dry coating process. For example, the first particles and the first coating raw material may be introduced without any solvent into a dry coating apparatus and may be stirred to mix the particles and material. The surface treatment may be performed on an obtained dry mixture.

The following description will focus on a method of synthesizing second particles. A second precursor may be prepared. The second precursor may include Ni, Mn, and A in Chemical Formula 1 discussed above. The A may be at least one element of B, Ba, Ca, Ce, Cr, Fe, Mg, Mo, Nb, Si, Sr, Ti, V, W, and Zr. In embodiments, the second precursor may be obtained by a method substantially the same as or similar to the method used for obtaining the first precursor.

The second precursor and a lithium raw material may be mixed at a certain ratio to form a mixture. The mixture may be added to a furnace and a second calcination process may be performed at a second temperature. The second temperature may range from about 700 °C to about 1,000 °C. For example, the second temperature may range from about 700 °C to about 800 °C. As such, the second temperature may be less than the first temperature. The second calcination process may otherwise be the same as or similar to that of the first calcination process.

The second calcination process may form second particles from the mixture including the second precursor and the lithium raw material. A crushing process may be performed on the synthesized second particles. The crushed second particles may have a second average diameter.

A coating process may be performed on the crushed second particles. The coating process includes coating cobalt on surfaces of the second particles. For example, the second particles and a melting agent may be mixed. The melting agent may be, for example, CoSO₄. A suitable amount of the melting agent may be added while using an agitator to mix the crushed second particles and a solvent (e.g., distilled water). A precipitating agent, for example NaOH, may be introduced to the solvent and uniformly mixed for about 20 minutes. The second particles may be filtered and dried, and then a surface treatment may be performed on the second particles. The surface treatment may include performing a heat treatment process under an oxidizing atmosphere such as air or oxygen. The surface treatment may be performed at a temperature of about 700 °C to about 1,000 °C.

The rechargeable lithium battery according to embodiments of the present disclosure may be used in automotive vehicles, mobile phones, and/or any other electrical devices, but the present disclosure is not limited in this regard.

The following will describe Example and Comparative Examples of the present disclosure. However, the following Examples, are merely exemplary, and the present disclosure is not limited to the Examples.

### (Fabrication of Positive Electrode Active Material)

Preparation Example 1: Preparation of First Particles in the Form of Secondary Particles

As a raw metal material, nickel sulfate (NiSO₄·6H₂O) and manganese sulfate (MnSO₄·H₂O) were mixed at a molar ratio of 75:25 and dissolved in distilled water (as a solvent) to prepare a mixed solution, and ammonium hydroxide (NH₄OH) and sodium hydroxide (NaOH) as precipitating agents were prepared to form a complex compound and added to the mixed solution.

After diluted ammonium hydroxide was introduced to a continuous reactor, the raw metal material mixed solution was continuously added, and sodium hydroxide was added to allow the reactor to maintain its pH. A reaction was slowly conducted for about 80 hours, and when the reaction was stabilized, an overflowed product was collected and then washed and dried to obtain a final precursor. Accordingly, a large-sized precursor Ni_{0.75}Mn_{0.25}(OH)₂, in the form of secondary particles in which primary particles were aggregated, was obtained and then washed and dried.

The large-sized precursor and LiOH were mixed to provide lithium at a molar ratio of 1.03 with respect to the total amount of metals (Ni+Mn) in the large-sized precursor. A first heat treatment was then performed for 10 hours at about 900 °C under an oxygen atmosphere to thereby obtain a first lithium composite oxide LiNi_{0.75-}Mn_{0.25}O₂. The obtained first lithium composite oxide was in the form of secondary particles in which primary particles are aggregated. The obtained first lithium composite oxide particles were crushed.

A coating process was performed by introducing distilled water as a solvent and aluminium hydroxide into a mixer along with the prepared first lithium composite oxide and then mixing. The aluminium hydroxide was introduced to provide aluminium at of 3 at% relative to the total elements excluding lithium and oxygen in the first lithium composite oxide. First particles coated with aluminium were dried for 12 hours at 150 °C, and a heat treatment (or, surface treatment) was performed for 15 hours at about 875 °C under an oxygen atmosphere. An average diameter of the obtained first particles was 12 µm.

Table 1 below lists the composition of the prepared first particles (final product), the composition of the coating layers, and a surface weight of aluminium.

**Table 1**

| | Ni (at%) | Mn (at%) | Al (at%) | Surface weight of Al |
|---|---|---|---|---|
| First particles (final product) | 74 | 23 | 3 | 2.94 |
| Coating layer | 61.55 | 29.62 | 8.83 | |

Preparation Example 2: Preparation of Second Particles in the Form of Single Particles

As a metal raw material, nickel sulfate (NiSO₄·H₂O) and manganese sulfate (MnSO₄·H₂O) were mixed at a molar ratio of 75:25 and dissolved in distilled water as a solvent to prepare a mixed solution, and ammonium hydroxide (NH₄OH) and sodium hydroxide (NaOH) as a precipitating agent were prepared to form a complex compound. Afterwards, the raw metal material mixed solution, the ammonium hydroxide, and the sodium hydroxide were introduced into a reactor. A reaction was then performed for about 20 hours while an agitation was performed. Thereafter, slurry in the reactor was filtered and washed with high-purity distilled water, and then dried for 24 hours to obtain powder of a small-sized precursor Ni_{0.75}Mn_{0.25}(OH)₂.

The obtained small-sized precursor power and LiOH were mixed to provide lithium at a molar ratio of 1.03 with respect to the total amount of metals (Ni+Mn) in the small-sized precursor power. A first heat treatment was then performed for 10 hours at about 950 °C under an oxygen atmosphere to thereby obtaining a second lithium composite oxide. The obtained second lithium composite oxide was crushed for about 30 minutes.

The second lithium composite oxide and distilled water were mixed in a molar ratio of 1:1.5, and a solution of 1 M CoSO₄ was added in an amount of 2 at% relative to the total amount of the second lithium composite oxide. After that, an equivalent amount of a solution of 7 M NaOH was added, and then the mixture was stirred for about 20 minutes. Second particles coated with cobalt were dried for 12 hours at 150 °C, and a heat treatment (or, surface treatment) was performed for 5 hours at about 900 °C under an oxygen atmosphere. An average diameter of the obtained second particles was 4.2 µm.

Table 2 below lists the composition of the prepared second particles (final product), the composition of the coating layers, and a surface weight of cobalt.

**Table 2**

| | Ni (at%) | Mn (at%) | Co (at%) | Surface weight of Co |
|---|---|---|---|---|
| Second particles (final product) | 74 | 24 | 2 | 4.2 |
| Coating layer | 63.64 | 27.98 | 8.38 | |

Preparation Example 3: Preparation of Positive Electrode Active Material in the Form of Secondary Particles

Large particles were prepared by the same method as in Preparation Example 1, except that no coating process was performed after the first treatment in Preparation Example 1.

Preparation Example 4: Preparation of Positive Electrode Active Material in the Form of Single Particles

Small particles were prepared in the same method as in Preparation Example 2, except that no coating process was performed after the first treatment in Preparation Example 2.

### Fabrication of Rechargeable Lithium Battery

### Embodiment 1

The first particles from Preparation Example 1 having an average particle diameter of 12 µm and the second particles from Preparation Example 2 having an average particle diameter of 4.2 µm were mixed in a weight ratio of 25:75 to prepare a composite positive electrode active material.

95 wt% of the positive electrode active material, 3 wt% of polyvinylidene fluoride as a binder, and 2 wt% of carbon nano-tube as a conductive material were mixed in an N-methylpyrrolidone solvent to prepare a positive electrode active material slurry. The positive electrode active material slurry was coated and dried on an aluminium current collector, and then pressed to make a positive electrode.

A coin half-cell was fabricated by using the positive electrode and a lithium metal counter electrode, interposing a multi-layered separator formed of polyethylene polypropylene between the positive electrode and the lithium metal counter electrode, and introducing an electrolyte in which 1.0 M LiPF₆ was added to a solvent containing ethylene carbonate and diethyl carbonate mixed in a volume ratio of 50:50.

### Comparative Example 1

A positive electrode and a rechargeable lithium battery were fabricated by the same method as in Embodiment 1, except that a mixture, in which the large particles of Preparation Example 3 and the small particles of Preparation Example 4 were mixed in a weight ratio of 25:75, was used as the positive electrode active material.

### Comparative Example 2

A positive electrode and a rechargeable lithium battery were fabricated by the same method as in Embodiment 1, except that a mixture, in which the large particles of Preparation Example 1 and the small particles of Preparation Example 4 were mixed in a weight ratio of 25:75, was used as the positive electrode active material.

### Comparative Example 3

A positive electrode and a rechargeable lithium battery were fabricated by the same method as in Embodiment 1, except that a mixture, in which the large particles of Preparation Example 3 and the small particles of Preparation Example 2 were mixed in a weight ratio of 25:75, was used as the positive electrode active material.

### Comparative Example 4

A positive electrode and a rechargeable lithium battery were fabricated by the same method as in Embodiment 1, except that only the small particles of Preparation Example 2 were used as the positive electrode active material.

### Comparative Example 5

A positive electrode and a rechargeable lithium battery were fabricated by the same method as in Embodiment 1, except that a mixture, in which the large particles of Preparation Example 1 and the small particles of Preparation Example 2 were mixed in a weight ratio of 50:50, was used as the positive electrode active material.

### Comparative Example 6

A positive electrode and a rechargeable lithium battery was fabricated by the same method as in Embodiment 1, except that a mixture, in which the large particles of Preparation Example 1 and the small particles of Preparation Example 2 were mixed in a weight ratio of 75:25, was used as the positive electrode active material.

### Comparative Example 7

A positive electrode and a rechargeable lithium battery were fabricated by the same method as in Embodiment 1, except that only the large particles of Preparation Example 1 were used as the positive electrode active material.

### Evaluation 1: Charge-Discharge Efficiency and Capacity Retention Rate

For the coin cells fabricated according to Embodiment 1 and Comparative Examples 1 to 3, charge-discharge efficiency and capacity retention rate were evaluated as follows using a charge-discharge apparatus.

### (1) Charge-Discharge Efficiency

Each of the coin cells was charged at 25 °C with a constant current of 0.2 C until a voltage reached 4.25 V, and then were charged with a constant voltage until a current reached 0.05 C. The completely charged coin cell was held for about 10 minutes, and then was discharged with a constant current of 0.2 C until a voltage reached 3 V.

(2) Capacity Retention Rate

Each of the coin cells was charged at 25 °C with a constant current of 1 C until a voltage reached 4.3 V, and then was charged with a constant voltage until a current reached 0.05 C. The completely charged cell was held for about 10 minutes and then discharged with a constant current of 1 C until a voltage reached 3 V, and this cycle was repeated 50 times to evaluate the capacity retention rate.

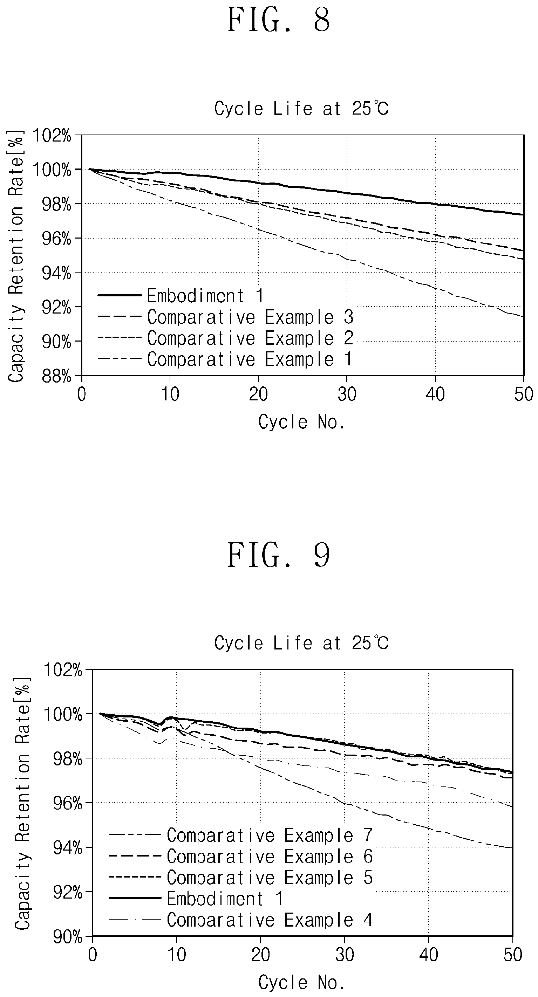

The capacity retention rate and the charge-discharge characteristics were partially investigated as shown in Table 3 below and FIG. 8.

The charge-discharge efficiency was calculated from Equation 1 below. FIG. 8 shows characteristics of capacity retention rates according to Embodiment 1 and Comparative Examples 1 to 3. FIG. 9 shows characteristics of capacity retention rates according to Embodiment 1 and Comparative Examples 4 to 7. Charge-discharge efficiency = [discharge capacity at 1st cycle / charge capacity at 1st cycle] × 100

**Table 3**

| Category | Charge capacity (mAh/g) | Discharge capacity (mAh/g) | Efficiency (%) |
|---|---|---|---|
| Embodiment 1 | 234.4 | 205.5 | 87.7% |
| Comparative Example 1 | 235.3 | 201.8 | 85.8% |
| Comparative Example 2 | 235.0 | 201.2 | 85.6% |
| Comparative Example 3 | 234.9 | 204.3 | 86.9% |
| Comparative Example 4 | 233.7 | 204.5 | 87.5% |
| Comparative Example 5 | 234.6 | 203.0 | 86.6% |
| Comparative Example 6 | 234.9 | 202.7 | 86.3% |
| Comparative Example 7 | 235.8 | 201.7 | 85.6% |

Referring to Table 3 and FIGS. 8 and 9, it may be seen that the coin cell fabricated according to Embodiment 1 has improved capacity retention rate and charge-discharge efficiency as compared to the coin cells fabricated according to Comparative Examples 1 to 7.

### Evaluation 2: Charge-discharge Characteristics and dQ/dV Analysis

A charge-discharge apparatus was used to evaluate charge-discharge efficiency and capacity retention rate of the coin cells fabricated according to Embodiment 1 and Comparative Examples 1 to 7.

The procedure of evaluation of charge-discharge characteristics was as follows.

Each of the coin cells was charged at 45 °C with a constant current of 0.2 C until a voltage reached 4.5 V, and then were charged with a constant voltage until a current reached 0.05 C. The completely charged cell was held for about 10 minutes and then discharged with a constant current of 0.2 C until a voltage reached 3 V (first cycle).

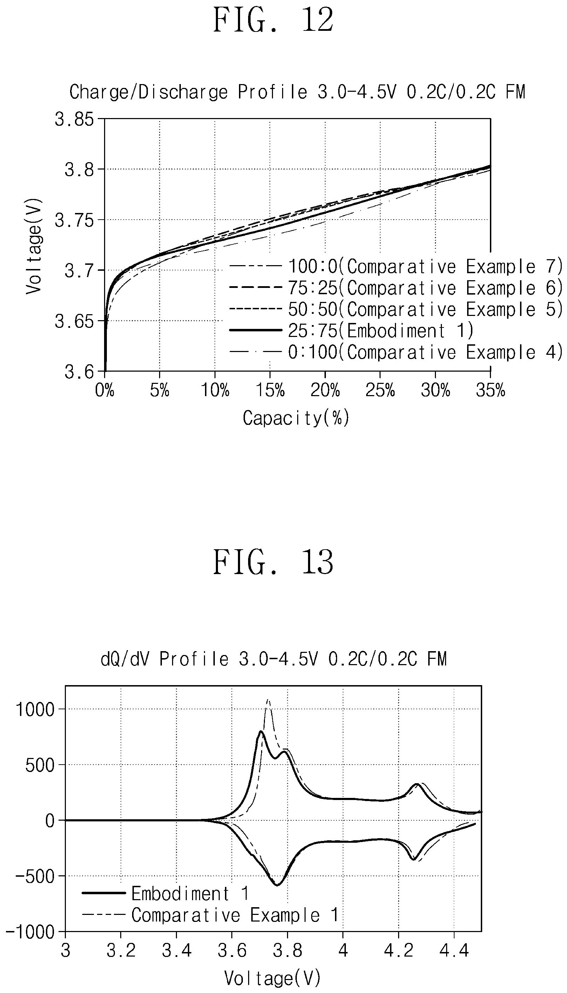

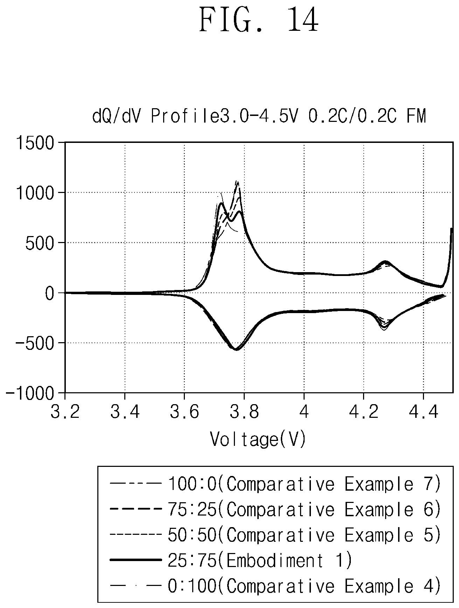

After the first cycle, the intensity at the H1+M peak relative to the H2+H3 peak at a charge peak, obtained from dQ/dV charge-discharge differential curve distribution that appears in a voltage range between 3.0 V and 4.5 V, was investigated and is shown in Table 4 below and FIGS. 13 and 14.

The H1+M peak may be a peak appearing at a voltage of 3.6 V to 3.8 V, and the H2+H3 peak may be a peak appearing at a voltage of 4.2 V to 4.37 V.

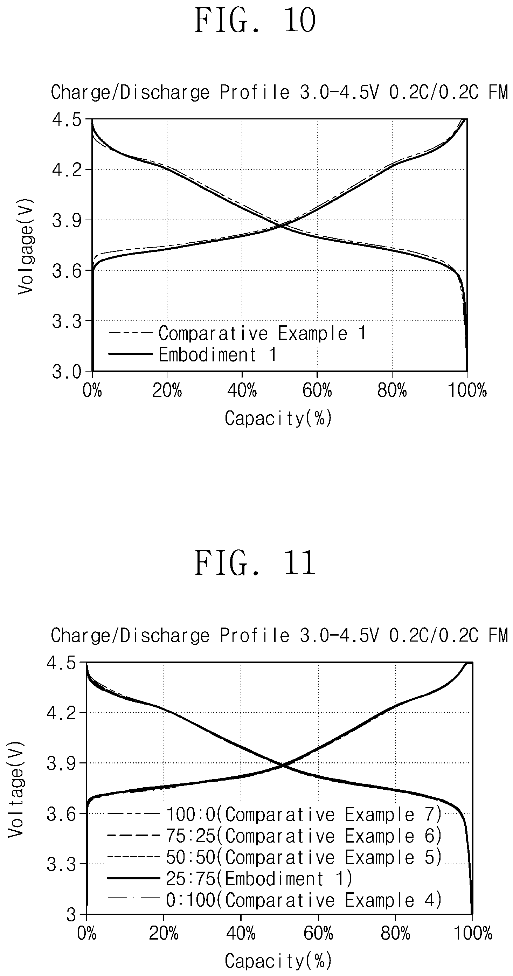

FIG. 10 shows charge-discharge characteristics after the first cycle in the coin cells according to Embodiment 1 and Comparative Example 1. FIG. 11 shows charge-discharge characteristics after the first cycle in the coin cells according to Embodiment 1 and Comparative Examples 4 to 7. FIG. 12 is a graph showing an enlarged portion of FIG. 11. FIGS. 13 and 14 show a dQ/dV charge-discharge differential curve after the first cycle.

**Table 4**

| Category | H1+M/H2+H3 |
|---|---|
| Embodiment 1 | 2.46 |
| Comparative Example 1 | 3.35 |
| Comparative Example 2 | 3.05 |
| Comparative Example 3 | 2.61 |
| Comparative Example 4 | 3.03 |
| Comparative Example 5 | 2.64 |
| Comparative Example 6 | 2.58 |
| Comparative Example 7 | 2.10 |

Referring to FIGS. 10 to 12, it may be seen that the coin cell of Embodiment 1 has improved charge-discharge characteristics as compared to the coin cells of Comparative Example 1 and 4 to 7. Referring to FIGS. 13 and 14 and Table 4, it may be seen that a ratio of intensity at the H1+M peak to intensity at the H2+H3 peak is in a range of 2.2 to 2.5 in the rechargeable lithium battery of Embodiment 1.

### Evaluation 3: X-ray Diffraction Analysis

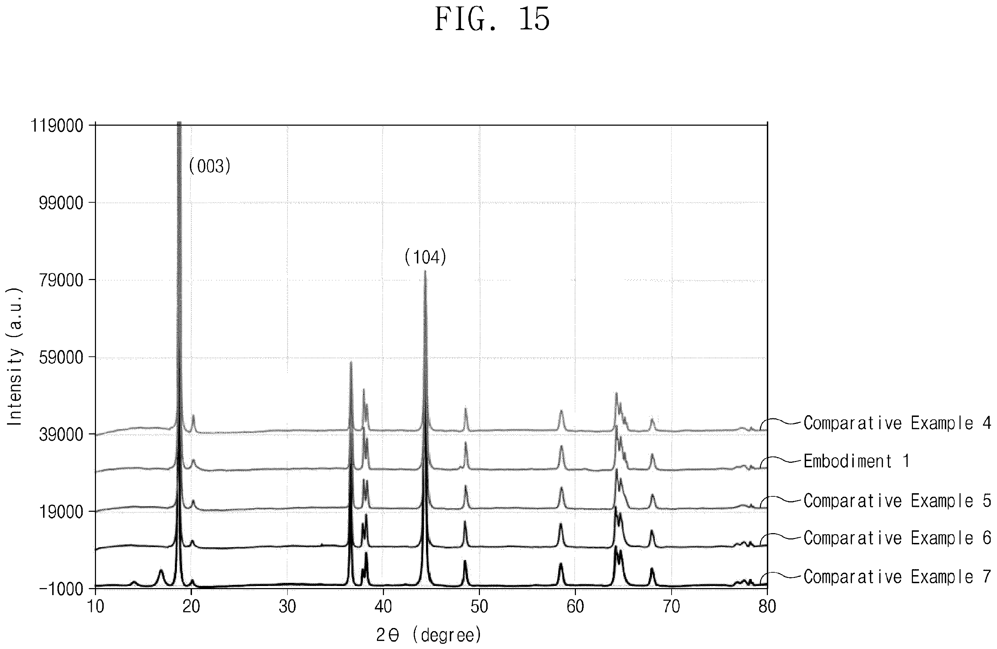

Table 5 and FIG. 15 show results of XRD patterns, observed using an X-ray diffraction analyzer, of the positive electrodes fabricated in Embodiment 1 and Comparative Examples 4 to 7.

**Table 5**

| Category | I₍₀₀₃₎/I₍₁₀₄₎ | FWHM (104) |
|---|---|---|
| Embodiment 1 | 5.120 | 0.188 |
| Comparative Example 4 | 7.739 | 0.176 |
| Comparative Example 5 | 3.700 | 0.197 |
| Comparative Example 6 | 2.747 | 0.199 |
| Comparative Example 7 | 1.865 | 0.210 |

Referring to Table 5, it may be seen that, in the rechargeable lithium battery of Embodiment 1 has a value of I(₀₀₃)/I(₁₀₄), a value of I(₀₀₃)/I(₁₀₄) is in a range between 4.2 and 6.1 and a full width at half maximum at a (104) peak is in a range between 0.18 and 0.19.

According to embodiments of the present disclosure, a positive electrode active material includes a first particle including aluminium coating and second particles including cobalt coating. The first particles having a large average particle diameter may be coated with aluminium to reduce side reactions with an electrolyte, and the second particles having a small average particle diameter may be coated with cobalt to increase structural stability. Accordingly, the positive electrode active material of the present disclosure may have increased lifetime and improved durability.

A rechargeable lithium battery that uses the positive electrode active material of the present disclosure may have improved discharge-discharge efficiency and capacity retention rate.

While this disclosure has been described in connection with what is presently considered to be preferred embodiments, it is to be understood that the present disclosure is not limited to the disclosed embodiments and covers various modifications and equivalent arrangements. Thus, the aforementioned embodiments should be understood to be exemplarily but not limiting on this disclosure.

## Claims

1. A positive electrode active material comprising:
first particles that include a first lithium composite oxide and have a first average diameter; and
second particles that include a second lithium composite oxide and have a second average diameter that is less than the first average diameter,
wherein each of the first particles further includes a first coating layer on a surface of the first lithium composite oxide,
wherein each of the second particles further includes a second coating layer on a surface of the second lithium composite oxide,
wherein each of the first and second lithium composite oxides is a lithium composite oxide that includes nickel and excludes cobalt,
wherein the first coating layer includes aluminium, and
wherein the second coating layer includes cobalt.

2. The positive electrode active material of claim 1, wherein each of the first and second lithium composite oxides is represented by a Chemical Formula:
LiₐNiₓMn_{y}A_{z}O_{2-b}X_{b}
with 0.9≤a≤1.8, 0.7≤x<1, 0<y≤0.3, 0≤z≤0.3, 0.9≤x+y+z≤1.1, and 0≤b≤0.1, with A being at least one of B, Ba, Ca, Ce, Cr, Fe, Mg, Mo, Nb, Si, Sr, Ti, V, W, and Zr, and with X being at least one of F, P, and S.

3. The positive electrode active material of claim 1 or claim 2, wherein the first particles include secondary particles that each include a plurality of primary particles.

4. The positive electrode active material of any one of claims 1 to 3, wherein the second particles are single crystals.

5. The positive electrode active material of any one of claims 1 to 4, wherein the first average diameter is about 10.0 µm to about 20.0 µm, and
wherein the second average particle diameter is about 1.0 µm to about 8.5 µm.

6. The positive electrode active material of any one of claims 1 to 5, wherein a surface weight of aluminium in the first coating layers is about 2 to about 4.6.

7. The positive electrode active material of any one of claims 1 to 6, wherein a surface weight of cobalt in the second coating layers is about 3 to about 5.8.

8. The positive electrode active material of any one of claims 1 to 7, wherein the first particles and the second particles have a weight ratio of about 25:75 to about 5:95.

9. A method of preparing a positive electrode active material, the method comprising:
synthesizing first particles that include a first lithium composite oxide and have a first average diameter;
synthesizing second particles that include a second lithium composite oxide and have a second average diameter that is less than the first average diameter;
coating the first particles with aluminium;
coating the second particles with cobalt; and
mixing the first particles and the second particles,
wherein each of the first and second lithium composite oxides is a lithium composite oxide that includes nickel and excludes cobalt.

10. The method of claim 9, wherein each of the first and second lithium composite oxides is represented by a Chemical Formula:
LiₐNiₓMn_{y}A_{z}O_{2-b}X_{b}
with 0.9≤a≤1.8, 0.7≤x<1, 0<y≤0.3, 0≤z≤0.3, 0.9≤x+y+z≤1.1, and 0≤b≤0.1, with A being at least one of B, Ba, Ca, Ce, Cr, Fe, Mg, Mo, Nb, Si, Sr, Ti, V, W, and Zr, and with X being at least one of F, P, and S.

11. The method of claim 9 or claim 10, wherein the first average diameter is about 10.0 µm to about 20.0 µm, and
wherein the second average diameter is about 1.0 µm to about 8.5 µm.

12. The method of any one of claims 9 to 11, wherein coating the first particles with aluminium includes:
mixing the first particles with an aluminium compound; and
performing a surface treatment on the first particles.

13. The method of any one of claims 9 to 12, wherein coating the second particle with cobalt includes:
mixing the second particles with a melting agent that includes cobalt; and
performing a surface treatment on the second particles.

14. The method of claim 13, wherein the melting agent is CoSO₄.
